# EUROPEAN PATENT SPECIFICATION

(11) **EP 2 245 237 B1**
(45) Date of publication and mention of the grant of the patent: **14.12.2011**
(21) Application number: 08866195.4
(22) Date of filing: 27.11.2008
(51) Int. Cl.: E04B 1/90, E04C 2/20, E04C 2/32

(54) **LAMINAR HEAT-AND/OR NOISE-AND/OR DAMP INSULATING PANEL**
LAMINARE WÄRME- UND/ODER LÄRM- UND/ODER FEUCHTIGKEITSISOLIERPLATTE
PANNEAU LAMINAIRE D'ISOLATION CONTRE LA CHALEUR ET/OU LE BRUIT ET/OU L'HUMIDITÉ

(30) Priority: 02.01.2008 HU 0800001
(43) Date of publication of application: 03.11.2010
(73) Proprietor: Subotics, Gyula, Gyõr 9024 (HU); Subotics, Zsolt, Gyõr 9022 (HU)
(72) Inventor: Subotics, Gyula, Gyõr 9024 (HU); Subotics, Zsolt, Gyõr 9022 (HU)
(74) Representative: Erdély, Péter
(86) International application number: PCT/HU2008/000137
(87) International publication number: WO 2009/083746

(56) References cited:
- WO-A-2005/066428
- DE-U1- 20 210 805

## Description

The object of the invention is the heat-and/or noise-and/or damp insulating panel for external or internal, mainly internal heat insulation of walls.

The wall is supplied with heat insulating cover in order to reduce heat conduction. The cover can be made of cork, wood, PUR foam, but mainly of polystyrene foam. The application of the polystyrene cover needs expertise, especially in case of external heat insulation and its effectiveness is very low in terms of heat insulation. There is a solution to this problem according to P0500311 Hungarian patent description, where a system consisting of a covering panel, an air space and a heat insulating plate is used for internal heat insulation. The disadvantage of this solution is that the covering panel is only underset by the clips applied around the perimeter of the panel, thus the covering panel is vulnerable in the intermediate spaces. Another disadvantage is that the heat insulating plate is built in the panel manually which makes production more expensive.

WO 2005/066428 Al discloses a sandwich element for sound and heat insulation, containing a vacuum insulating panel embedded between plates. The insulation panel may be covered with vacuum- and gas-proof foil, which may comprise at least one metal layer. The continuous metal layer, however - though it is vacuum- and gas-proof - can not improve heat insulation, as it is in contact with other construction materials instead of air, which could intensify heat reflection. Furthermore, due to the fact that the metal layer is gas tight, mildew growing may occur.

The aim of the present invention is the elimination of the above mentioned deficiencies, i.e. to produce a panel for internal heat insulation inhibiting heat-and/or noise radiation as well as the propagation of damp through evaporation in a cheap, simple and highly effective way. - We can reach this aim using a laminar panel which has cellular plates built in it to keep the air locked between the cells forming the cellular plates and the surface for insulation, mainly the wall, so a heat insulating layer is added to the cellular plate to intensify heat and noise insulating.

So the invention is a laminar heat-and/or noise-and/or damp insulating panel for external or internal, mainly internal heat insulation of walls described with the fact that the panel consists of at least one layer containing at least two cellular plates and at least one layer of heat insulating plate which are united with the help of a layer of glue on the side of the cellular plates opposite the wall or in another way which is well-known in itself. This way, well-known in itself can be for example welding.

According to a advantageous solution a multi-layer unit is formed from the cellular plate.

In this case the air layer between the cells and the wall for insulation is also multiplied making heat-and/or noise insulation more intensive. Theoretically it can be unlimitedly intensified. Only the price and space reduction can set the limits.

The effect can be further intensified expediently if the unit formed from the cellular plate is united with the heat insulating plate on the side of the cellular plate opposite the wall.

It is advantageous if the multi-layer unit formed from the cellular plate is united with a heat insulating plate on its both sides.

It is very important that the cells forming the cellular plate are rigid and form-fast so that they are not damaged in case of load stress, e.g. hit or bump and the heat insulating plate attached to the cellular plate also keeps its shape.

It is also important that the cells are transparent and metal-baked at least on one side or coated with paint containing metallic grain. The surface, formed this way, intensifies heat- reflexion raising the temperature of the space with a wall for insulation.

Heat insulation can also be intensified using cells which are made of plastic with metallic grains. In this case the technical conditions of intensified heat-reflexion are given in advance.

According to another criterion of the invention minimum bearing, maximum pressure-tightness and maximum heat-reflexion is rendered by the shape of the cells which are made up of polygons and curves or of their combinations.

It is expedient to make the insulating plate of polystyrene foam. Of course it can be made of another material too. It should have a good heat insulating characteristic. This kind of material can be e.g. cardboard.

The invention is further on illustrated in detail in the accompanying drawings which show the advantageous, realizable examples of the proposed solution.
Fig. 1 is the top view of the cellular plate.
Fig. 2 is not part of the claimed subject-matter and is showing an axonometric drawing of the cross-sectional view of a two-layer panel,
Fig. 3 is not part of the claimed subject-matter and is showing a cross-sectional view of a panel consisting of two layers of heat insulating plate and one layer of cellular plate
Fig. 4 is the cross-sectional view of the unit consisting of three cellular plates.
Fig. 5 is the axonometric drawing of the cross-sectional view of the three-layer panel.
Fig.6 is the axonometric drawing of the cross-sectional view of the four-layer panel.
Fig 7/a is the cross-sectional view of the three-layer panel
7/b is the cross-sectional view of two three-layer panels attached to each other.
Fig. 8 is the cross-sectional view of the two-layer panel attached to the wall. As seen in Fig. 1 the cells are united and form the connected(2)cellular plate. The cellular plate (2) is shaped from suitable plastic e.g. hard PVC or polystyrene foil through vacuum ) forming or pneumatic forming.

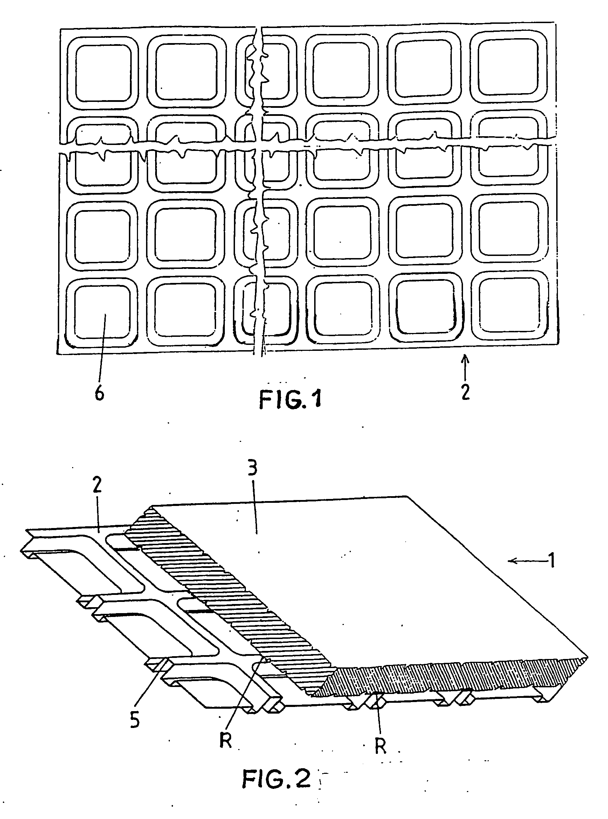

Fig. 2 is not part of the claimed subject-matter and is showing a (3) heat insulating plate placed on a (2) cellular plate. These above mentioned two types of (2,3) plates are attached to each other with the help of a layer of glue (R) applied on the (5) side of the cellular plate opposite the wall.

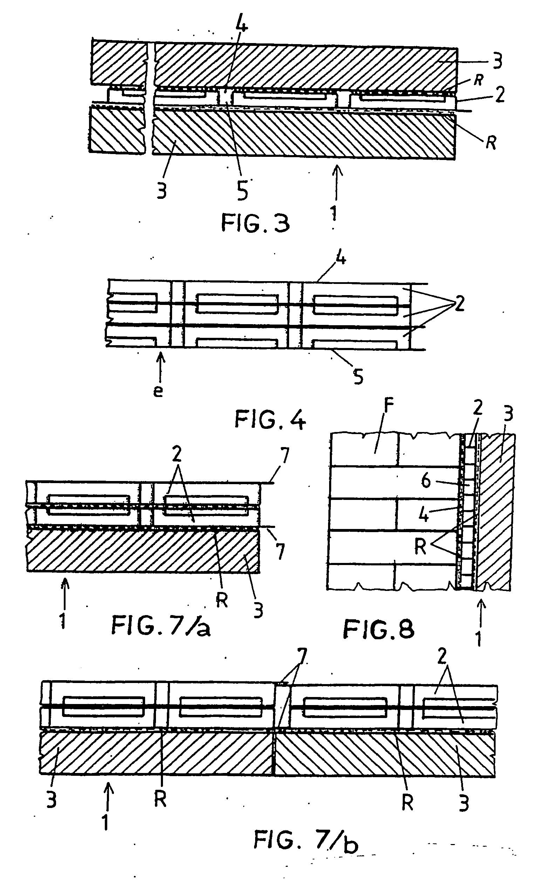

Fig. 3 is not part of the claimed subject-matter and is showing a (3) heat insulating plate on both (4,5) sides of the (2) cellular plate attached with the help of a layer of (R) glue.

In Fig. 4 three (2) cellular plates are placed on each other where the (4) side facing the wall and the (5) side opposite the wall can be used for applying the layer of glue (R) and the (3) heat insulating plate.

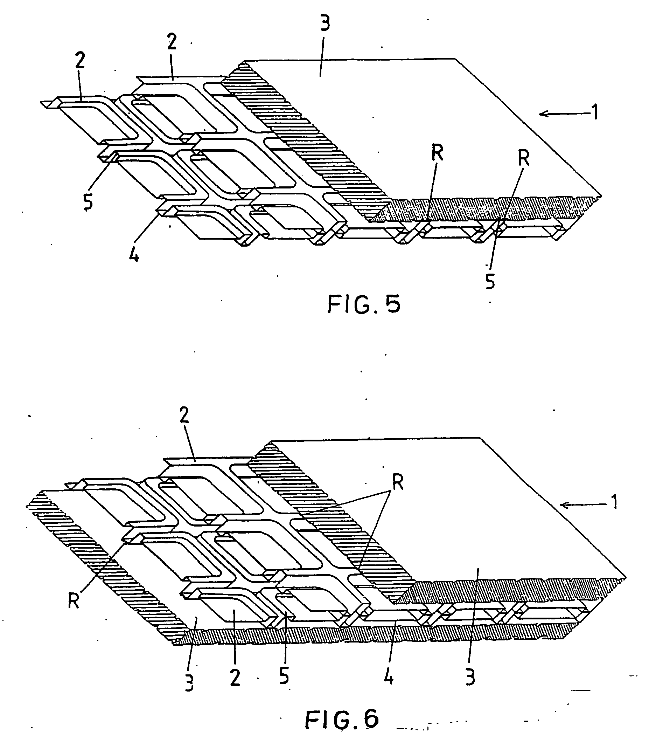

In Fig. 5a unit consisting of two (2) cellular plates and a (3) heat insulating plate are attached to each other. The unit consisting of the (2) cellular plates and the (3) heat insulating plate are attached to each other with a layer of (R) glue on the (5) side of the unit consisting of the two (2) cellular plates opposite the wall. Its (4) side facing the wall provides room for the layer of glue (R) for attaching it to the wall.

In Fig. 6 a unit consisting of two (2) cellular plates and two (3) heat insulating plates are united. The unit consisting of two (2) cellular plates and the two separate (3) heat insulating plates are attached to each other with a layer of (R) glue on the (4) and (5) side facing the wall and (5) the sides of the unit consisting of two (2) cellular plates.

In Fig. 7/a a unit consisting of two (2) cellular plates and supplied with a (7) negative allowance and a (3) heat insulating plate are attached with a layer of (R) glue.

In Fig. 7/b two three-layer panels (formed from a unit consisting of two (2) cellular plates and a (3) heat insulating plate) are attached to each other and united with a layer of (R) glue. Adjusting is enabled by a (7) negative allowance.

In Fig. 8 it can be seen that adjusting the (1) panel to the (F) wall the (4) side of the (2) cellular plate facing the wall sticks to the wall with its (6) cells applying a layer of (R) glue. Doing so the air remains in the (6) cells and provides heat-and/or noise-and/or damp insulation, which is intensified by the (3) heat insulating plate applied with a layer of (R) glue.

The panel according to the invention has several advantages:
- If we apply a panel consisting of two (2) cellular plates and one heat insulating plate for internal heat insulation, the heat insulating capacity of the panel is more than 70% according to the tests by ÉMI. It means that heating energy is reduced to one third of the energy we would need if we did not use the panel according to the invention for heat insulation.
- It is light-weight, which is of great importance while applying it (in the action of heat insulating);
- It is easy to adjust it to the wall: -after the optional necessary repairs- the wall is coated with glue or some kind of mechanical adjusting elements (i.e. screws in wall plugs) are placed in the wall and the (1) panel due to its light weight can easily be lifted and fixed. The heat insulating plate can be painted or papered then as a final action.
- It can also be applied on the external wall; in this case it is expedient to apply some finish or cover, resistant to the inclemencies of weather (precipitation, sunshine, fluctuation of temperature) on the (3) heat insulating plate.
- Its production can be automatized so it can be mass-produced cheaply;
- The panel (1) can be put into circulation cut to measure, ready to use.
- Its distribution is also simple, because it is cut in a shape which is easy to store and due to its light weight it can easily be moved by human power.

Of course the invention is not restricted to the advantageous realizable shapes demonstrated above. It can be realized in any form according to the claim definitions, but it does not exceed the circle of protection of the present invention.

**Reference characters**
- F -: wall
- e -: unit consisting of cellular plates
- R -: layer of glue
- 1 -: panel
- 2 -: cellular plate
- 3 -: insulating plate
- 4 -: the side of the cellular plate facing the wall
- 5 -: the side of the cellular plate opposite the wall
- 6 -: cell
- 7 -: negative allowance

## Claims

1. Laminar heat insulating panel (1), mainly internal heat insulation of walls (F) of buildings, the panel (1) containing heat insulating layer and cellular layer, said heat insulating layer is fixed on the side (5) of said cellular layer opposite the wall (F), by a layer of glue (R) or by any other way, said heat insulating layer contains at least one heat insulating plate (3) **characterized in that** said cellular layer contains at least two cellular plates (2), wherein the cells (6) forming the cellular plates (2) are made of transparent, rigid and form-fast plastic material, so that they are not damaged in case of load stress and the heat insulating plate (3) attached to said cellular plates (2) keeps its shape, the cells containing metallic grains or coated with paint containing metallic grains.

2. The laminar heat insulating panel (1) as claimed in claim 1, **characterized in that** the layer containing at least two cellular plates (2) is provided with heat insulating plates (3) on both sides.

3. The laminar heat insulating panel (1) as claimed in claim 1 or 2, **characterized in that** the cells (6) of the cellular plates (2) have the shape of polygons and curves or of their combination providing a minimum bearing, maximum pressure-tightness and maximum heat-reflection by the shape of the cells.

4. The laminar heat insulating panel (1) as claimed in any of claims 1 to 3, **characterized in that** the cellular plates (2) are made of vacuum formed or pneumatic formed hard PVC or polystyrene foil.

5. The laminar heat insulating panel (1) as claimed in claim 1, **characterized in that** at least one heat insulating plate(3) is made of polystyrene foam.

## Patentansprüche

1. Mehrschichtiges isolierendes Bauelement (1), insbesondere für innere Isolierung von Wänden (F) in Gebäuden, mit einer Isolierschicht und einer Zellenschicht, wobei die Isolierschicht wenigstens eine Isolierplatte (3) enthält und an die der Gebäudewand (F) entgegensetzte Seite der Zellenschicht geklebt oder anders befestigt ist, **dadurch gekennzeichnet, dass** die Zellenschicht wenigstens zwei Zellenplatten (2) enthält, wobei diese Zellenplatten (2) aus durchsichtiger, rigider und formfester Folie so gestaltet sind, dass sie durch Belastung nicht beschädigt wird und die an den Zellenplatten (2) befestigten Isolierplatte ihre Form behält, und wobei die Zellen aus Kunststoff mit Metallkörnchen bestehen, oder mit einem Metallkörnchen enthaltenden Farbstoff überzogen sind.

2. Bauelement (1) nach Anspruch 1, **dadurch gekennzeichnet, dass** Isolierplatten (3) an beiden Seiten der Zellenschicht aus Zellenplatten (2) angeordnet sind.

3. Bauelement (1) nach Anspruch 1 oder 2, **dadurch gekennzeichnet, dass** die Zellen (6) der Zellenplatten (2) eine Form mit geringster Auflagefläche, maximaler Druckfestigkeit und Wärmereflektionsfähigkeit hat, und aus Vielecken, Bögen oder aus ihren Kombination ausgebildet sind.

4. Bauelement (1) nach einem der Ansprüche 1 bis 3, **dadurch gekennzeichnet, dass** die Zellenplatten (2) aus vakuumverformtem oder pressluftverformtem hartem PVC oder Polystyrolfolie gestaltet sind.

5. Bauelement (1) nach einem der Ansprüche 1 bis 4, **dadurch gekennzeichnet, dass** wenigstens eine Isolierplatte (3) aus Polystyrolschaum besteht.

## Revendications

1. Panneau isolant (1) empilé préférentiellement pour l'isolation thermique des murs (7) interne comprenant une couche d'isolation thermique et une couche de plaque cellulaire, où la couche d'isolation thermique se compose d'au moins une couche de chaleur á plaques isolantes (3) et celá est appliquée ou fixée en autre maniere sur le côte de la couche de plaque cellulaire opposé le mur (F), **caracterisé en ce que** la couche de plaque cellulaire se compose d'au moins deux plaques cellulaires (2), les plaques cellulaires sont formées d'une feulle rigide et indéformable en maniere qu'ils ne soient pas endommagées en consequence de chargement important et la couche de chaleur á plaques isolantes (3) reunie avec les couches de plaques cellulaires (2) maintienne sa forme en consequence de chargement important, et les cellules (6) formant la plaque cellulaire (2) sont faites avec des grains metallique ou sont recouverts de peinture contenant du grain metallique.

2. Panneau isolant (1) selon la revendication 1, **caracterisé en ce que** la couche formée par les plaques cellulaires (2) est unie á la couche de chaleur á plaques isolantes (3) sur ses deux côtes (4, 5).

3. Panneau isolant (1) selon la revendication 1 ou 2, **caracterisé en ce que** les cellules (6) de la plaque cellulaire (2) sont constitués par la forme de polygones et de courbes ou de leurs combinaisons assurant le roulement minimum, le maximum de pression d'étanchéité et un maximum de chaleur réflexion.

4. Panneau isolant (1) selon l'une des revendications 1-3, **caracterisé en ce que** les plaques cellulaires (2) sont en feuille de PVC ou polystyrène solide formées par moulage sous vide ou par moulage par air comprimé.

5. Panneau isolant (1) selon l'une des revendications 1-4, **caracterisé en ce que** la couche de chaleur á plaque isolant (3) est en mousse de polystyrène.
